# EUROPÄISCHE PATENTANMELDUNG

(11) **EP 0 688 905 A1**
(43) Veröffentlichungstag der Anmeldung: **27.12.1995**
(21) Anmeldenummer: 94109345.2
(22) Anmeldetag: 17.06.1994
(51) Int. Cl.: E02B 8/04, E02B 7/54, F16K 3/02

(54) **Gehäuseloser Schieber**

(71) Anmelder: PASSAVANT-WERKE AG, D-65322 Aarbergen 7 (DE)
(72) Erfinder: Städtler, Alexander, Dipl.-Ing., D-65326 Aarbergen 2 (DE); Dicks, Horst, D-65326 Aarbergen 2 (DE)

(57) **Zusammenfassung**

Bei gehäuselosen Schiebern ist ein in Aussparungen des Bauwerks einzulassender Rahmen vorgesehen. Für die Schieberplatte sind Führungsschienen vorhanden, die normalerweise mit dem Rahmen an der Bauwerksfläche befestigt werden. Die Dichtung liegt in der Regel an der Schieberplatte. Die Erfindung besteht darin, daß der Rahmen fortgelassen ist und die Schieberplatte direkt mit einer ein nachgiebiges Hohlprofil aufweisenden Dichtung direkt gegen die Bauwerksfläche abgedichtet wird. Die Betonfläche braucht dafür nur grob geglättet sein. Als Dichtprofil eignet sich ein sog. Notenprofil.

## Beschreibung

Die Erfindung bezieht sich auf gehäuselose Schieber für den Einbau in Bauwerksaussparungen bei Kanälen oder Gerinnen.

Gehäuselose Schieber sind dadurch gekennzeichnet, daß sie außer der Schieberplatte nur noch Führungsschienen an einem Rahmen aufweisen, der unter Einfügen einer Dichtung am Bauwerk befestigt, vorzugsweise angedübelt wird. Der Aufwand, der mit einem solchen verwindungssteifen Rahmen getrieben wird, ist hoch. Eine wesentliche Vereinfachung und Verbilligung wird erreicht, wenn erfindungsgemäß die Dichtleiste als nachgiebiges Hohlprofil ausgebildet und die Gegenfläche am Bauwerk geglätteter Beton ist. Der Rahmen für den Schieber besteht also jetzt nur noch aus den beiden Führungsschienen; die Verbindungen der beiden Führungsschienen entfallen genauso wie die Dichtung, die bei der bisherigen Ausführungsform unter den Rahmen gelegt werden mußte. Am Rahmen ist keine Gegenfläche für die Dichtung der Schieberplatte vorhanden; die Schieberplatte dichtet vielmehr direkt gegen die Bauwerksfläche, die entsprechend geglättet ist. Als nachgiebiges Dichtprofil eignet sich ein sog. Notenprofil, das sowohl in Kreisform als auch in Quadrat- bzw. Rechteckform verlegt werden kann. Die Befestigung des Profils erfolgt wie üblich mittels Klemmleisten, über die der Hohlprofilteil der Dichtung vorsteht.

Die Montage der Führungsschienen wird erleichtert durch lösbar befestigte Traversen, die die Führungsschienen zu einem geschlossenen Rahmen ergänzen. Die Führungsschienen enthalten des weiteren Pratzen, die für den abstandsrichtigen Einbau der Führungsschienen sorgen. Die Gegenfläche am Bauwerk besteht vorzugsweise aus wasserdichtem Beton. Auch eine wasserfeste Beschichtung oder Imprägnierung ist möglich.

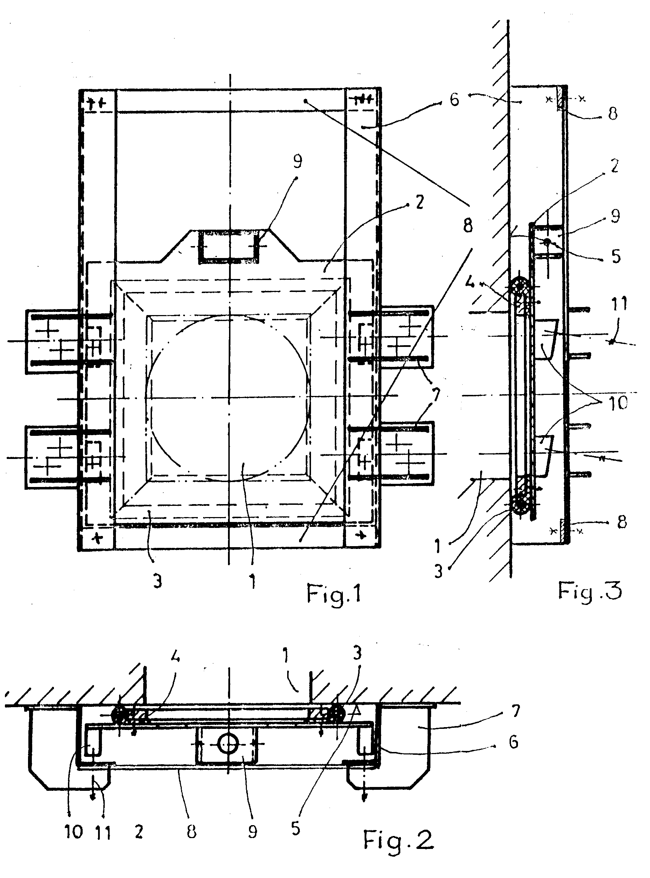

Die Führungsschienen und die Schieberplatte können die bekannte Keilung bekommen, die dafür sorgt, daß die Schieberplatte in die Schließstellung gebracht und in der Schließstellung ausreichend stark angedrückt wird. Ein Die Abbildungen zeigen eine bevorzugte Ausführungsform der Erfindung in der Ansicht (Fig.1), in der Draufsicht (Fig. 2) und im Längsschnitt (Fig. 3).

Bei dem zu verschließenden Gerinne handelt es sich um einen Kanal 1 mit kreisrundem Querschnitt. Die Schieberplatte 2 hat rechteckige Kontur, und auch die Dichtung 3 ist streifenförmig im Rechteck angeordnet. Die Dichtung besitzt notenförmiges Profil wobei der Steg des Profils mit Klemmleisten 4 befestigt ist. Die Klemmleisten sind dünner als das Hohlprofilteil der Dichtung, so daß dieser Profilteil ausreichend weit vorsteht und an der Gegenfläche 5 nachgiebig anliegt.

Geführt wird die Schieberplatte 2 in zwei vertikal angeordneten Führungsschienen 6, die hier nur L-Profil haben. Im Bereich der Schließstellung besitzt jede Führungsschiene zwei Pratzen 7, mit denen die Führungsschienen an der Wand der Bauwerksaussparung insbesondere mittels Dübel befestigt werden. Um diese Befestigung zu erleichtern und die Ausrichtung der Führungsschienen zu ermöglichen, sind zwei Traversen 8 vorgesehen, die lösbar am oberen und unteren Ende der Führungsschienen angeschraubt werden und zusammen mit den Führungsschienen einen geschlossenen und weitgehend verwindungssteifen Rahmen ergeben. Nicht dargestellt ist die Hubspindel und der Antrieb. Die Hubspindel arbeitet mit einer Spindelmutter zusammen, die in den oben an der Schieberplatte vorgesehenen Schuh 9 eingesetzt wird.

Zum Andrücken der Schieberplatte in Schließstellung enthält die Schieberplatte in jeder Führungsschiene zwei Klemmkeile 10, die mit in den Führungsschienen schräg gelagerten, Stellschrauben 11 in der Weise zusammenarbeiten, daß die Schieberplatte am Ende der Senkbewegung in die Schließstellung gebracht wird. Statt der Stellschrauben können Keilrollen vorgesehen sein, die ebenfalls einstellbar gelagert sind.

Die Gegenfläche für die Dichtung am Bauwerk ist zumindest geglättet, vorzugsweise mit einem Glattstrich versehen. Dies ermöglicht der Dichtung eine vollflächige Anlage. Der Rand der Kanalöffnung ist gegen Abbrechen ausreichend bewehrt.

## Patentansprüche

1. Gehäuseloser Schieber für Gerinne und Kanäle, bestehend aus zwei vertikal verlaufenden, an der quer zum Gerinneverlauf liegenden Bauwerksfläche zu verankernden Führungsschienen und einer Schieberplatte mit den Gerinne- oder Kanalquerschnitt umfassender Dichtleiste, **dadurch gekennzeichnet**, daß die Dichtleiste (3) an der Schieberplatte befestigt und zur Bauwerksfläche hin ausgerichtet ist, daß die Dichtleiste als nachgiebiges Hohlprofil ausgebildet und die Gegenfläche (5) am Bauwerk geglätteter Beton ist.

2. Schieber nach Anspruch 1, **dadurch gekennzeichnet**, daß die Dichtleiste (3) ein Notenprofil hat.

3. Schieber nach Anspruch 1 oder 2, **dadurch gekennzeichnet**, daß an der Schieberplatte (2) Keile (10) befestigt sind, die mit in den Führungsschienen (6) vorgesehenen Keilflächen (11) oder Keilrollen in Schließrichtung zusammenwirken.

4. Schieber nach Anspruch 3, **dadurch gekennzeichnet**, daß die Keilflächen (11) einstellbar sind.
